# EUROPEAN PATENT SPECIFICATION

(11) **EP 3 924 849 B1**
(45) Date of publication and mention of the grant of the patent: **10.01.2024**
(21) Application number: 20705535.1
(22) Date of filing: 12.02.2020
(51) Int. Cl.: H04L 9/40, G06F 21/55

(54) **SECURE INTEGRATED CIRCUIT ARCHITECTURE**
GESICHERTE INTEGRIERTE SCHALTUNGSARCHITEKTUR
ARCHITECTURE DE CIRCUIT INTÉGRÉ SÉCURISÉE

(30) Priority: 12.02.2019 NL 2022559
(43) Date of publication of application: 22.12.2021
(73) Proprietor: COGNITIVE IC B.V., 2628 CS Delft (NL)
(72) Inventor: SMAILBEGOVIC, Fethulah, 2600 AA Delft (NL); HAMDIOUI, Said, 2600 AA Delft (NL); TAOUIL, Mottaqiallah, 2600 AA Delft (NL)
(74) Representative: Nederlandsch Octrooibureau
(86) International application number: PCT/NL2020/050075
(87) International publication number: WO 2020/167117

(56) References cited:
- WO-A1-2012/119218
- US-A- 6 088 804
- US-A1- 2004 015 719
- US-A1- 2006 253 909
- US-A1- 2007 256 127
- US-B1- 9 754 221
- Andreas Bernauer ET AL: "Current state of ASoC design methodology", , 1 January 2008 (2008-01-01), XP055633767, Retrieved from the Internet: URL:http://drops.dagstuhl.de/opus/volltext e/2008/1564/pdf/08141.BernauerAndreas.Pape r.1564.pdf cited in the application

## Description

### Field of the invention

The present invention relates to an integrated circuit hardware arrangement comprising one or more components.

### Background art

The article 'Current state of ASoC design methodology' by A. Bernauer et al., 2008, Dagstuhl Seminar Proceedings, discloses designs of integrated circuits and systems using such integrated circuits, wherein system reliability is determined based on activity, power and temperature analysis. This can be helpful to prevent problems caused by aging or faults, e.g. by lowering operating speed of an integrated circuit at runtime if a problem is detected.

The US patent publication US-B-9,754,221 with the title "Processor for implementing reinforcement learning operations" discloses embodiments with "agents" as basic compute elements, where each of the agents is a group of tensors. These agents operate as co-processor to the main programmable component and operate on AI algorithms.

US patent publication US2004/0015719 discloses a firewall that interconnects and controls access between external and internal networks and a plurality of security agents that monitor a data flow and system calls over the internal network.

US patent publication US6,088,804 discloses a dynamic network security system that is able to respond to a security attack on a computer network having a multiplicity of computer nodes.

WO 2012/119218 A1 discloses a system and method for implementing platform security on a consumer electronic device having an open development platform wherein the device is of the type which includes an abstraction layer operable between device hardware and application software and a secure software agent is provided for embedding within the abstraction layer forming the operating system

### Summary of the invention

The present invention seeks to provide security solutions in integrated circuits and systems utilizing such integrated circuits, which allow to timely detect and mitigate consequences of cyberattacks.

According to the present invention, an integrated circuit hardware arrangement as defined above is provided, wherein each of the one or more components comprises embedded circuitry allowing run-time execution of a micro-agent, and an interface to an agent network interconnecting the one or more components, the micro-agent being arranged to determine a signature of the associated component, and to communicate via the agent network with further connected micro-agents being executed in further ones of the one or more components of the integrated circuit hardware arrangement, the micro-agent being further arranged to detect a possible attack by analysing the determined signature, wherein the one or more components in combination with the micro-agent being executed, form a basic building block of the integrated circuit hardware arrangement.

According to the present invention, in further exemplary embodiments, an integrated circuit hardware arrangement is defined as a system of micro-agents, wherein each of the micro-agents continues monitors its own state, state of the other micro-agents, learns and plans actions (alone or in cooperation with other micro-agents to detect and mitigate consequences of cyberattacks.

Using the present invention embodiments, it will be possible to enable the detection of not only known attacks, but also of unknown attacks, to obtain a fast detection and reaction time (detection time will be reduced from weeks (as of today) to minutes), to detect malicious users and abuse of regular operations even at the chip level, to provide adaptability, less dependent on external updates, and to provide an unpredictable security architecture for an attacker with no single point of failure.

The invention is defined by independent claim 1. Optional features are comprised by dependent claims 2-17.

### Short description of drawings

The present invention will be discussed in more detail below, with reference to the attached drawings, in which
Fig. 1 shows an exemplary embodiment of an architecture of an integrated circuit hardware arrangement having multiple micro-agent based components;
Fig. 2 shows a state diagram associated with an exemplary embodiment of the present invention;
Fig. 3 shows an exemplary embodiment of the general architecture of a component allowing run-time execution of a micro-agent;
Fig. 4-7 show a number of examples of data representation and handling in an integrated circuit hardware arrangement with multiple micro-agent based components;
Fig. 8 shows a block diagram of an exemplary sensor unit employing embodiments of the present invention; and
Fig. 9 shows a block diagram of a system on a chip as an exemplary embodiment of the present invention.

### Description of embodiments

It is worldwide recognised that no organization and no person are immune to cyber-attacks and attacks increase in size and complexity (due e.g. to the expanding number of services available online (loT + data centres, cloud), increasing sophistication of cyber criminals). State-of-the art security solutions mainly target known-attacks, and not unknown attacks (which could take place in the future). In addition, the solutions are mainly software based.

The present invention embodiments target hardware driven end-to-end secure solution for connected electronic objects. The solution provided by the present invention embodiments has the following advantages: 1) Attack resilience for known and unknown attacks, 2) Fast detection and reaction time, 3) Detection of malicious users and abuse of regular operations, 4) Adaptability, less dependent on external updates, 5) Unpredictable security architecture for attacker with no single point of failure.

The present invention embodiments are based on the concept of multi-agent cooperation, inspired by the same concept found in the nature, where the resilience/robustness does not only come from competition between organisms or species, but also from cooperation. The hardware driven end-to-end secure solution of the present invention embodiments uses the integrated circuit hardware arrangements (chips, IC) as the lowest level of cooperation (similar to DNA in organisms). Each integrated circuit hardware arrangement may comprise several and different micro-agents (i.e. implemented as part of IC design, such as a memory, CPU, etc.), and these will implement intelligence to enable the cooperation at different complexity levels, including chip, system, and system-of-systems level. The core of the intelligence incorporated at the lowest level is to keep an eye on the behaviour of each low level agent, share the information at higher hierarchical levels, and act if a misbehaviour is detected by, e.g., requesting self-repair, excluding and disconnecting the misbehaving agent, etc.

In various embodiments, which will be described in more detail below, one or more of the following aspects are present and incorporated: modelling the system as a cooperative multi-agent system; integrate intelligence in the chips by adding a specific piece of hardware in each chip component; methods enabling these agents to perform early prediction (of misbehaving agents) and recovery (e.g. by disconnecting the agent); and having security as an integral part of basic chip functionality.

In this description, the term micro-agent is used both to indicate a specific functionality being implemented in an integrated circuit hardware arrangement, but on occasion also to describe specific hardware implementations. In this sense the present invention embodiments are defined in the context of an integrated circuit hardware arrangement 1 comprising one or more components 2; 2A-2G, each of the one or more components 2; 2A-2G comprising embedded circuitry 21-31 allowing run-time execution of a micro-agent. This definition is further explained and detailed by reference to the various exemplary embodiments described below, with further reference to the drawings.

Furthermore, in the present invention embodiments, each component 2; 2A-2G further comprises an interface to an agent network 4 interconnecting the one or more components 2; 2A-2G. The micro-agent being executed in run-time is furthermore arranged to determine a signature of the associated component 2; 2A-2G, to communicate via the agent network 4 with further connected micro-agents being executed in further ones of the one or more components 2; 2A-2G of the integrated circuit hardware arrangement 1, and to detect a possible attack by analysing the determined signature (of the associated component, e.g. by performing a predetermined check on the signature). It is noted that in the description below, the term integrated circuit 1 is to be seen as the integrated circuit hardware arrangement 1 terminology as used in the attached claims.

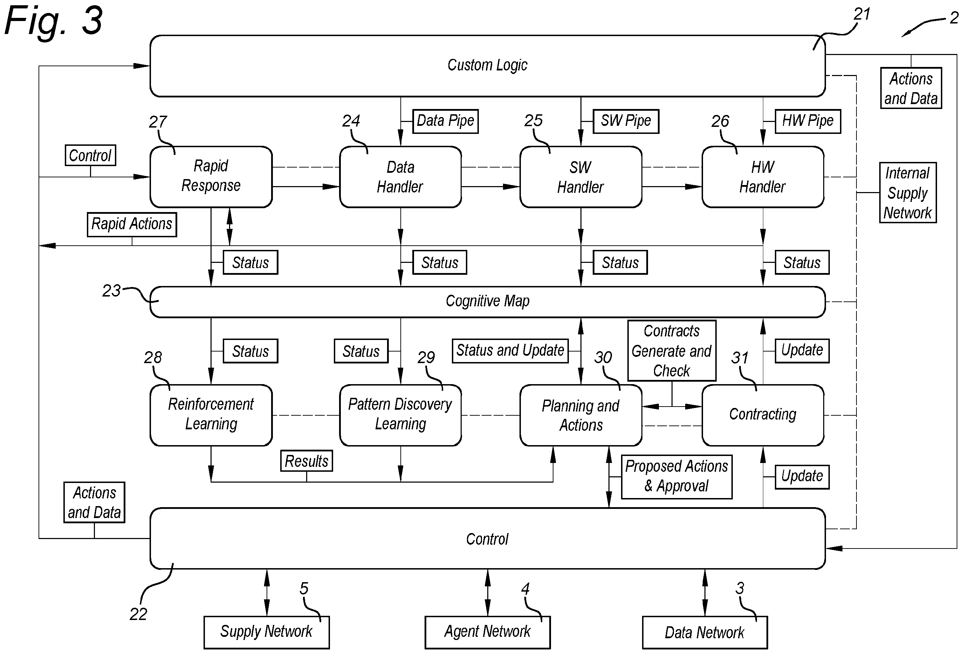

The micro-agents which are implemented in embedded circuitry 21-31 (see also description of Fig. 3 below) and act as basic building blocks of the integrated circuit 1, operate on the following principles:
- Entanglement:
   ∘ All data present physically on the integrated circuit 1, whether at processing or at rest or in transfer, are entangled in each other.
   ∘ This also applies to all physical components (including the embedded circuitry 21-31) of the integrated circuit 1. Each physical component is entangled in other components, irrespective of their direct or indirect physical connection to each other.
- Mastering the time, energy, reset and data flows:
   ∘ Each physical component and/or group of components on the integrated circuit 1 master own time (clock), energy (power), reset and data flows what consequently contributes to sustainable integrity. Any malicious component can be instantly cut off from the data, time and energy flow.
- Contracts and Signatures
   ∘ To insure the rightful behavior of the physical components on the integrated circuit 1, each physical component enters a contract with other components. There are static contracts (imposed at design and at fabrication time to insure proper bandwidth, data or operations) and dynamic contracts (imposed by the application), where the latter must not violate the static contracts.
   ∘ All contracts are signed by the physical signature of the components, which are checked continuously.
- Learn and Remember
   ∘ Each physical component learns from the patterns of activity and remembers the outcome, so that the future response to the events can be efficient.

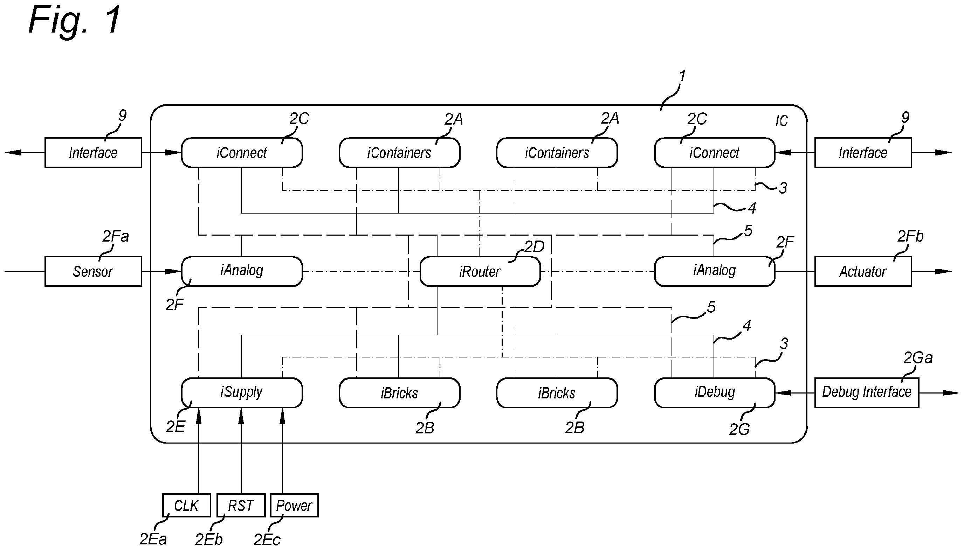

Since the integrated circuits 1 of any size and/or application may have different types of logic (digital or analog) for different functionalities (processing, interface, clock generation, interconnection, interface), the following micro-agent executing components 2 are available as building blocks of integrated circuits 1. A block diagram of an exemplary embodiment of an integrated circuit according to an embodiment of the present invention is shown in Fig. 1.

To be able to cover required functionality of an integrated circuit 1 and intelligently manage the security of the integrated circuit, the one or more components 2 of the integrated circuit comprises one or more of the following:
an iContainer component 2A arranged to store data, e.g. holding data at rest, using semiconductor memory elements;
an iBrick component 2B comprising digital logic implementing standard digital IP blocks, e.g. CPU and related elements;
an iConnect component 2C comprising interface and control circuitry (standard interfaces, also for connecting the integrated circuit 1 to the outside world);
an iRouter component 2D arranged to control data flow between the one or more components (and thus between micro-agents);
an iSupply component 2E arranged to manage clock, power and/or reset lines;
an iAnalog component 2F comprising analog circuitry arranged to interface with external analog inputs, e.g. sensor inputs, the analog circuitry e.g. being amplifiers, analog-to-digital/ digital-to-analog converters, etc.;
an iDebug component 2G arranged to perform debugging tasks (e.g. to allow insight into micro-agents, which may be limited or even prohibited depending on the level of trust to the external entity controlling the debugging.

As shown in the exemplary embodiment shown in Fig. 1, some of the components 2A-2G are internal to the integrated circuit 1, and some have interfaces external to the integrated circuit 1: The iConnect components 2C have (external) interfaces 9, one of the iAnalog components 2F has a connection 2Fa to a sensor, a further one of the iAnalog components 2F has a connection 2Fb to an actuator. Similarly, the iSupply component 2E has external inputs, such as a clock signal CLK 2Ea, a reset line RST 2Eb, and a power input 2Ec.

All the micro-agents in the components 2, 2A-2G are interconnected by three different internal networks, i.e. a Data network 3, an Agent network 4 and a Supply network 5. The purpose of the data network 3 is to connect and enable standard (control and) data flows as designed and initiated by different applications being executed in components 2; 2A-2G of the integrated circuit 1. The agent network 4 functionally connects all micro-agents and enables coordination between micro-agents which are active on various components 2; 2A-2G on the integrated circuit 1. Micro-agents also are arranged to exchange regularly information about their current state (i.e. their signature) so that each micro-agent is aware of what is happening with other micro-agents. The agent network 4 is asynchronous and independent of any clocks existing on the integrated circuit 1 and data flow. The supply network 5 supplies all components 2; 2A-2G with critical integrated circuit parameters, such as power, clock, and reset.

In other words, an exemplary embodiment of an integrated circuit 1 is provided, wherein each of the one or more components 2; 2A-2G comprises an interface to a data network 3, the data network 3 providing a data interconnection (e.g. a standard data and control interconnection) between the one or more components 2; 2A-2G. In a further embodiment, specific ones (possibly not all, e.g. the iAnalog component 2F may be excluded) of the one or more components 2; 2A-2G comprise an interface to a supply network 5, the supply network 5 being arranged to supply power, clock and/or control (e.g. reset) signals to the specific ones of the one or more components 2; 2A-2G. Furthermore, in an even further embodiment, the micro-agent is arranged to determine the signature in an asynchronous manner.

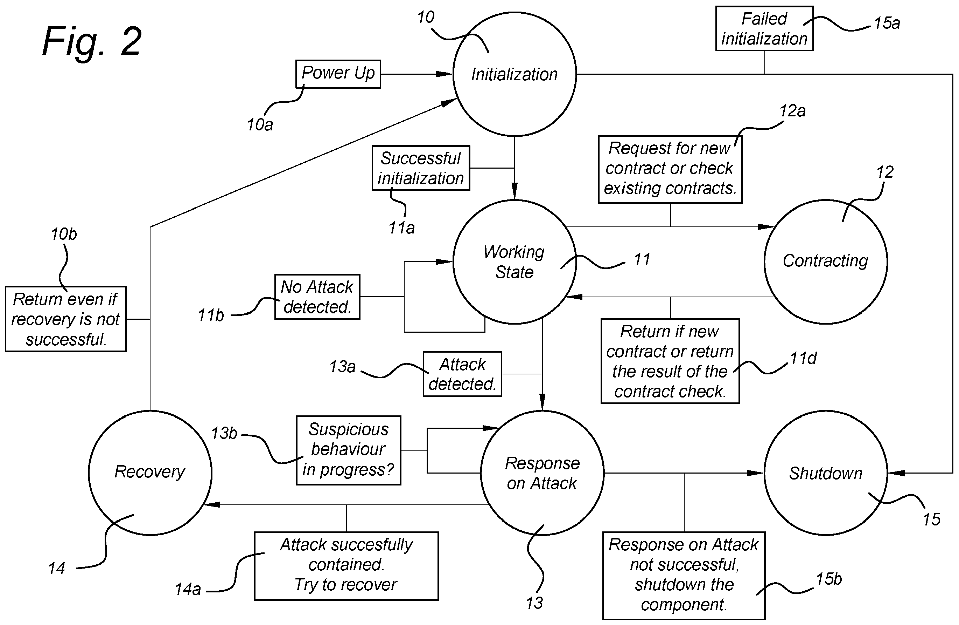

Fig. 2 shows a state diagram associated with an exemplary embodiment of the present invention, i.e. how a (physical) component 2; 2A-2G according to one of the present invention embodiments (run-time executing a micro-agent) on the integrated circuit 1 operates. After power up 10a, the micro-agent enters an Initialization state 10. Two types of initialization exist. First type of initialization is when the micro-agent is started for the very first time. This means the micro-agent is powered up in the secure settings. This is a state wherein each physical component 2; 2A-2G gets to know the other components, initialize own cognitive maps 23 (see description further below with reference to Fig. 3) and authenticate internally and each other. Second type of initialization is standard initialization in the field, when the system wakes up from the previous power down. The only difference in actions between first type of initialization and second type of initialization (standard) is the initialization and settings of the cognitive map 23. In the second type of initialization, each physical component 2; 2A-2G already knows what has existed before the power down. If the initialization state is successfully passed (transition path 11a) the micro-agent goes into Working State 11, otherwise it will go into Shutdown state 15 (via transition path 15a) due to a permanent failure. The Working State 11 is where the micro-agent executes the required functionality.

The specialty of this Working state 11 is also being aware of any request for contracting (transition path 12a), whether new or checking for existing contracts between the components 2; 2A-2G. The contract is the agreement between the micro-agents in different components 2; 2A-2G to cooperate, and negotiated in Contracting state 12, after which a transition path 11d is leading back to Working State 11. Note that different situations (e.g. attack detected in the neighborhood, too sensitive data are being processed, ...) can lead to dissolution of a contract, even though cooperation was successful in the past. Thus, in a further embodiment, the micro-agent is further arranged to exchange contracting data with the further micro-agents via the agent network 4.

In Working State 11, various detection methods against different attacks are active and these are operative to check for any signs of potential malicious behavior constantly. If no attack is detected, the micro-agent returns to Working State 11 via transition path 11b. In case that the attack is detected (transition path 13a), the micro-agent enters Response on Attack state 13. Thus, in an embodiment of the invention, the micro-agent is further arranged to enter a response on attack state 13 upon detection of a possible attack, the response on attack state 13 comprising active control of the associated component 2; 2A-2G. There are different responses depending on the status of the micro-agent or state of the application. The main aim in this Response on Attack state 13 is to try recover the state of the micro-agent from being attacked to normal state. If this is possible (transition path 14a), the micro-agent will go into Recovery state 14. Some responses may have hidden the sensitive data from the attacker and this requires a separate state of the micro-agent, the Recovery state 14. Whether the recovery was successful or not, the micro-agent will return to Initialization state 10 via transition path 10b. However, if the response to the attack does not lead to containment of the attack (after some "time threshold" is fulfilled), the micro-agent will shut down itself (via transition path 15b to Shutdown state 15), or will be shut down by other micro-agents.

As mentioned above, the micro-agents applied in the various invention embodiments may differ in their functionality, but do share some common parts of the (hardware) architecture. An exemplary implementation of the internal hardware architecture of a component 2; 2A-2G is shown in the block diagram of Fig. 3. In a further generic group of embodiments, each of the one or more components 2; 2A-2G comprises a control unit 22 which is arranged to allow the micro-agent to communicate with the further connected micro-agents. In even further embodiments, each of the one or more components 2; 2A-2G comprises a self-organised cognitive map 23 which is arranged to store data associated with the signature determined by the micro-agent.

As shown in the exemplary block diagram of Fig. 3, the following elements form the embedded circuitry which allow to implement and execute the micro-agent in each of the components 2; 2A-2G:
- Custom Logic unit 21: This is where the micro-agents in different types of components 2; 2A-2G differ from each other. The custom logic unit 21 is specific for each micro-agent and holds the actual functionality as specified by design and applications. This functionality is e.g. a CPU, memory, logic accelerator, interface, etc. Thus, in a further embodiment the embedded circuitry comprises a custom logic unit 21 interfacing with logic gates of the component 2; 2A-2G, wherein the micro-agent is further arranged to determine the signature based on determination of logic gate related parameters. This allows e.g. detecting hardware attacks on the integrated circuit 1, i.e. in an embodiment, the micro-agent is further arranged to determine a possible hardware attack by analyzing the determined signature. In a further embodiment, the determination of logic gate related parameters comprises one or more of current behavior measurement, delay measurement, integrity check, side channel behavior measurement (of associated logic circuitry). In an even further embodiment,
- Handler units (Data handler unit 24, SW handler unit 25 and HW handler unit 26): Depending on configuration, a micro-agent can have all three or some of the following pipes between the custom logic unit 21 and the handler units 24-26, as indicated in Fig. 3; data pipe, SW pipe and HW pipe. Each pipe has its own handler 24-26 which has specific tasks, such as Authentication via Signatures, Security Policies Set Up and Check, Statistics of Usage and Protection. These functionalities, together with their continuous monitoring and response, form the basic block of sustainable integrity of the micro-agent.
- Authentication via Signatures:
   ∘ Data Signatures: Certain types of data, like e.g. sensor data or configuration data, have certain behavior which indicate the validity of the data. Valid behavior of data builds the approved data signature. Any deviation is learned and transmitted to Rapid Response Module 27 and Cognitive Map 23 for response.
   ∘ SW Signatures: SW code is organized and built to produce own signatures. Code is prepared with specialized instructions to extract and transmit the SW signature(s) to corresponding block in the micro-agent. The SW signatures are checked, learned, remembered and the result transmitted to the cognitive map 23 to be considered in response planning
   ∘ HW Signatures: HW components in the custom logic unit 21 continuously produce own signatures. By continues checking of those signatures, the proper functioning is tested. Also, all fluctuations of the signature are learned, remembered and the result is transmitted to the cognitive map 23 to be considered in response planning.
   ∘ Data, SW and HW signatures are used for the authentication of the custom logic unit 21 itself and its proper functionality.

∘ Security Policies Set Up and Check: For all three pipes (data, SW and HW), security policies can be set. Either firm put in silicon during manufacturing (static), or the policies can be changed (dynamic) via each application (e.g. SW code). Security policy can tell e.g. when and how some specific data can be accessed or define under what circumstances physical component should operate. By setting up and checking the fulfillment of the security policies, proper functionality of the micro-agent is ensured. Thus, in a further embodiment, the micro-agent is further arranged to execute additional functionality (e.g. in the form of code) for detecting software attacks.
∘ Statistics of Usage: For each of the pipes, the statistics can be used to monitor potential functionality mishandling. This happens e.g. when data is leaked with very low bandwidth to the outside world or when the physical component is not used or used too much. This information is transmitted to the cognitive map 23 for consideration when planning the response. Thus, in a further embodiment, the additional functionality (code) is arranged to collect statistical data associated with the integrated circuit 1.
∘ Protection: Protection is especially important for data. In case of detected malicious behavior, this functionality allows immediate data scramble according to the embedded scheme. Immediate erase of data, as potential response, is handled by Rapid Response Module 27 (Rapid Actions).

- Rapid Response module 27: This module allows immediate response to the malicious behavior of components of the same micro-agent. With this feature, the micro-agent can react promptly without going through the cognitive map 23. Also, this module 23 is fed by the different pipes (data, SW and HW) and control unit 22 of the micro-agent.
- Cognitive Map 23: This represents the environmental map of the micro-agent storing the up-to-date status of the own components and other micro-agents that exist on the integrated circuit 1.
- Reinforcement Learning module 28: This module works on the existing status of the cognitive map 23 and proposes actions how to correct misbehavior of the own physical components.
- Pattern Discovery Learning module 29: This is a general never-ending learning module. It learns continuously behaviors in the cognitive map 23 and compares to the previous experience. If something relevant is found, the result is transferred to the planning and actions module 30.
- Planning and Actions module 30: The inputs from reinforcement learning module 28 and pattern discovery learning module 29 are checked on feasibility and scheduled and then translated into detailed steps understandable to all components of the same micro-agent.
- Contracting module 31: Approves new contracts and/or checks the existing contracts. The changes in this module 31 are reflected in the cognitive map 23, e.g. new contracts mean a new node in the cognitive map 23 or violated contracts mean deletion of an existing node from the cognitive map 23. It is input to the Planning and Actions module 30 for consideration when planning the response.
- Control unit 22: The tasks of the control unit 22 in micro-agent are manifold, including the already mentioned communication with the further connected micro-agents:
- Communication: The control unit 22 communicates with other micro-agents via the Agent Network 4, receives and transmits data from and to Data Network 3, supervises incoming supply network 5 branching and its internal counterpart (internal supply network).
- Actions: Approves, rejects or delays the proposed actions. It also oversees and controls execution of the actions, including the rapid response module 27. These actions can be, e.g. logic repair, test, shutdown, slow the clock, etc.
- Contracting: Updates the contracting module 31 with the respect of new contracts, status of existing contracts, including their violation.

It is noted that the above described authentication functionality helps the authentication of internal components and the micro-agent itself with the other micro-agents. An important part of the micro-agent architecture as described above is data representation and handling. Note that the general term data is used which includes e.g. data from sensors and SW code. Many security issues arise from the open nature of data representation and handling, which can be detected, read and even disrupted. To minimize these influences compartmentalization of data is provided. This is reinforced also by the independence of micro-agents and their cooperation. Micro-agents facilitate this compartmentalization through the concept of an intelligent container, a data structure enforced in hardware (or implemented) as an iContainer component 2A as described above. An iContainer component 2A stores not only data and/or code but also additional information which tells more about the past and current behavior of the data or code stored in an iContainer component 2A. The micro-agent implemented in an iContainer component 2A can with additional processing predict the future behavior of the iContainer component 2A. Data exchange and communication between different iContainer components 2A is executed via exchanged packets, which include not only data but some (not all!) of the information from the iContainer component 2A. As data structure, iContainer components 2A can be seen as executional threads of today's programmable integrated circuits 1.

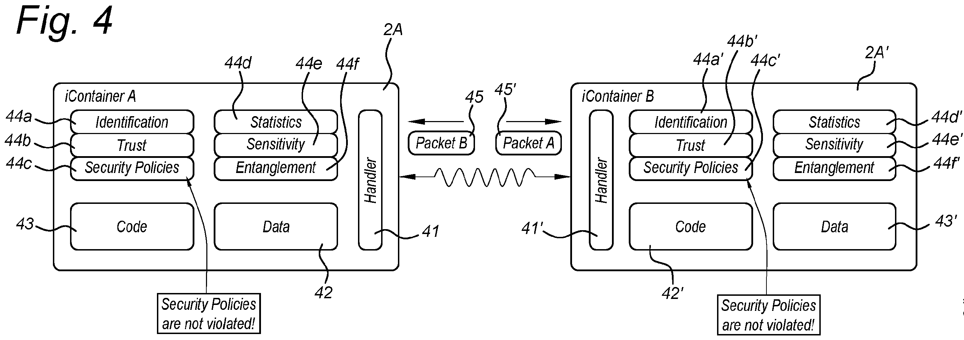

In Fig. 4-7, examples are presented of potential interaction between different iContainer components 2A. Each iContainer component 2A as presented in these figures, is provided with functional blocks corresponding to the functionality described above with reference to Fig. 3, but for clarity reasons, new reference numerals indicate the following functional blocks:
41 Handler unit (combination of functionality of data, SW and HW handler 24-26);
42 Data (e.g. application or sensor data stored in the custom logic unit 21);
43 Code (e.g. application code stored in the custom logic unit 21);
44a Identification (unique identification as part of Authentication functionality);
44b Trust (continuously updated level of trust also as part of Authentication functionality);
44c Security Policies (as part of Security Policies Set Up and Check functionality);
44d Statistics (as part of Statistics of Usage functionality);
44e Sensitivity (sensitivity level of stored data or code set by the application, as part of Rapid Response module 27 functionality);
44f Entanglement (additional functionality, see description below).

Fig. 4 shows an example of positive entanglement, i.e. the situation when two iContainer components 2A, 2A' properly work with each other. Data is exchanged using data packet A 45'and data packet B 45, the handlers 41, 41' are continuously able to determine that security policies are not violated.

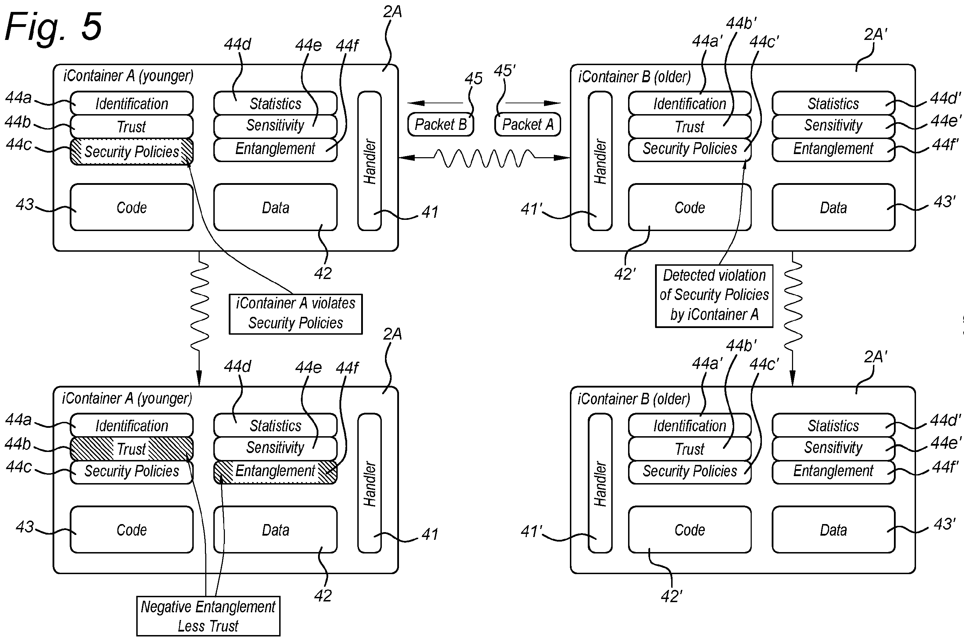

Fig. 5 shows an example of negative entanglement, i.e. when one of the iContainer components 2A, 2A' (iContainer A and iContainer B) is not allowed to communicate to other iContainer as it is forbidden by security policies, In the top of Fig. 5, a violation of security policies 44c' is detected, resulting in the situation at the bottom of Fig. 5, wherein the left iContainer module 2A now has stored that a lower trust 44b and a lower entanglement exists (stored in the respective signatures and cognitive maps 23).

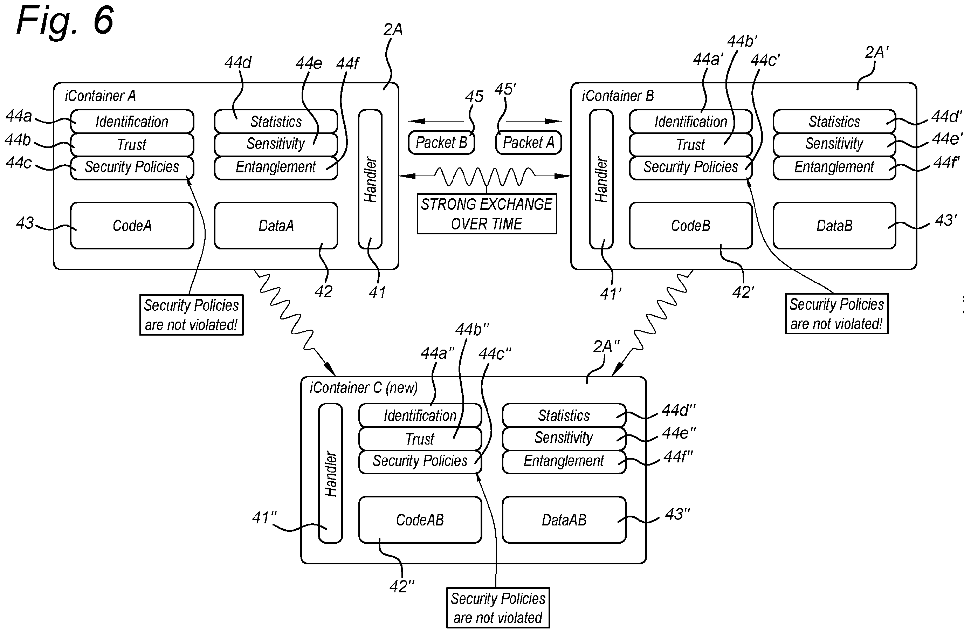

Fig. 6 shows an example of unifying entanglement, i.e. when two iContainer components 2A, 2A' (iContainer A and iContainer B) work frequently with each other (indicated in Fig. 6 as `Strong exchange over time') so that a unified iContainer component 2A" (iContainer C) will improve performance.

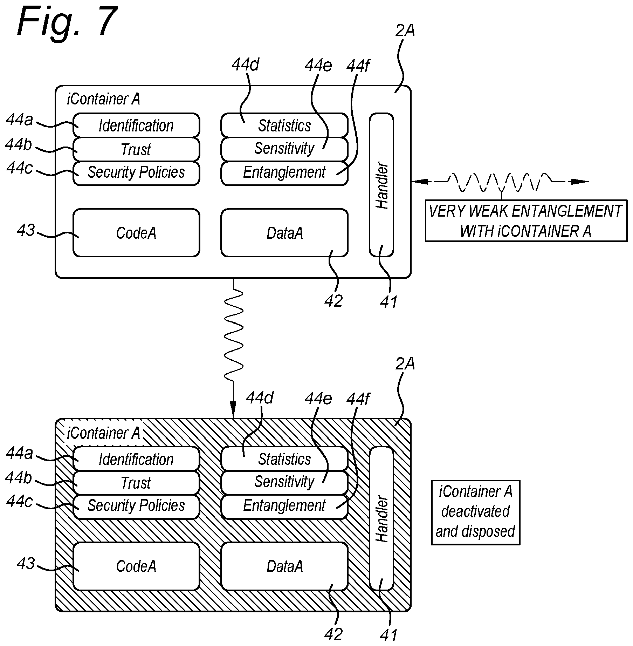

Fig. 7 shows an example of dissolution of a single iContainer component 2A (iContainer A), i.e. in case that the iContainer component 2A is rarely or not used at all (indicated in Fig. 7 by 'Very weak entanglement with iContainer A', and the hatched background in the bottom situation rendering).
This functionality is made possible by the constant monitoring and detection functionality implemented in the micro-agents being executed in the components 2; 2A-2G which form an integrated circuit 1 according to the invention embodiments. In an even further embodiment, the micro-agent is further arranged:
- to communicate with the further micro-agents via the agent network 4,
- to collect signatures from the further micro-agents,
- to detect a possible attack by analyzing the collected signatures, and
- to send control data (Actions and Status) to the further micro-agents via the agent network 4.

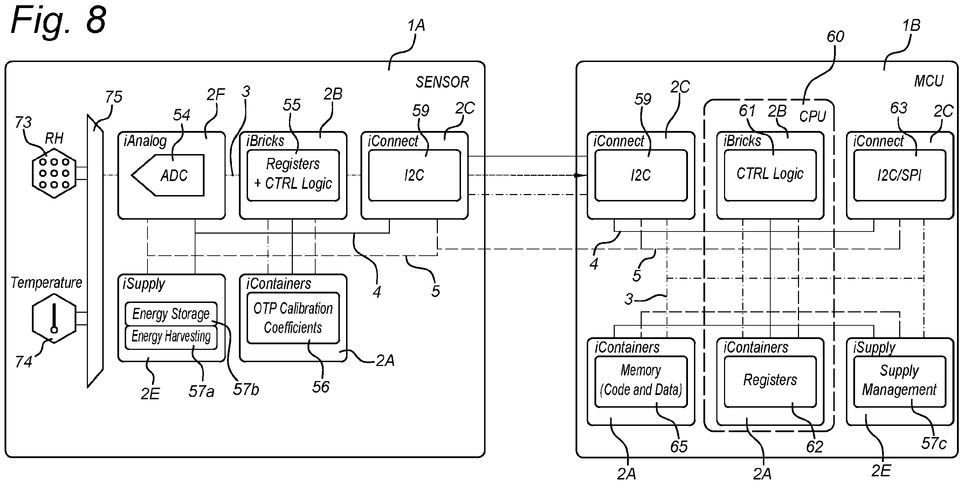

Fig. 8 shows a block diagram of an exemplary sensor unit employing embodiments of the present invention, i.e. a system comprising two or more integrated circuits 1A, 1B according to any one of the present invention embodiments. Here, an example is given of a sensor node 1A of an integrated circuit 1, having a relative humidity sensor 73 and a temperature sensor 74 connected to a multiplexer 75. In general, in a further embodiment, the integrated circuit 1 further comprises one or more sensor units 73, 74 connected to an iAnalog component 2F.

A sensor node 1A is generally a node which does not permit complex processing due to power and space constraints, but does require considerations due to potential attacks. All standard components of a sensor node (ADC 54, Registers and Control Logic 55, Calibration Coefficients 56, Interface 59, Energy Storage 57b and Energy Harvesting 57a) are put into respective components 2 executing micro-agents: An iAnalog component 2F, an iBrick component 2B, and iConnect component 2C, an iSupply component 2e and an iContainer component 2A are interconnected through data network 3, agent network 4 and supply network 5. As discussed above, this allows compartmentalization of the architecture to control and react to potential malicious activities.

Over the interface (e.g. I2C) data are transmitted to a microcontroller unit (MCU) 1B, which is also implemented as a micro-agent based system, using two iConnect components 2C (with an I2C interface 59 and I2C/SPI interface 63, respectively), iContainer components 2A (with code and data memory 65, and Registers 62, respectively), an iBrick component 2B (with CTRL logic 61), and an iSupply component 2E (with a supply management unit 57c). The combination of iBrick component 2B and iContainer component 2A with Registers 62 forms a central processing unit CPU 60.

This interface is also used to exchange security relevant information between the sensor node 1A and the microcontroller unit 1B. E.g. received data from the ADC 54 are packed and transferred to the microcontroller unit 1B.

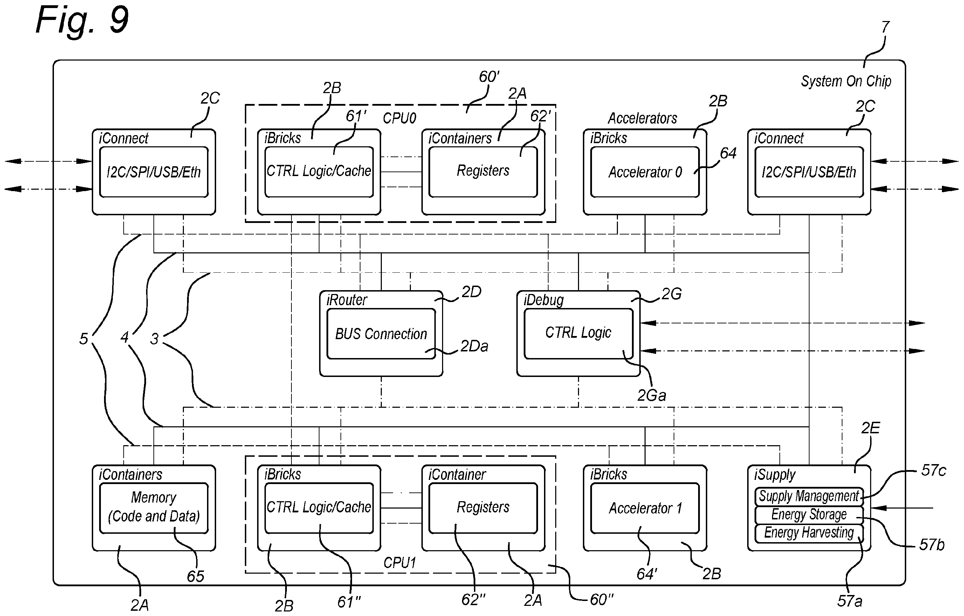

Fig. 9 shows a block diagram of a system on a chip (SoC) 7 as an exemplary embodiment of the present invention using the micro-agent based components 2; 2A-2G. This represents a further embodiment of the present invention, wherein the one or more components 2; 2A-2G are arranged as a system on a chip 7. iConnect components 2C are used to implement the standard interfaces, e.g. I2C, SPI, USB or Ethernet. There are two CPUs (CPU0 or 60' and CPU1 or 60"), each containing one iBrick component 2B (with control logic and cache 61', 61") and one iContainer component 2A (with registers 62', 62"). Accelerators are implemented by using iBrick components 2B (with Accelerator 0 (64) and Accelerator 1 (64'), respectively, associated with one of the CPUs CPU0, CPU1), and memory is implemented by using the iContainer component 2A with Memory (Code and data) 65. Power, Clock and Reset supply is managed via iSupply component 2E, including the function blocks Energy harvesting 57a, Energy storage 57b and Supply management 57c). All micro-agents/ components 2; 2A-2G are interconnected through agent network 4, data network 3 and supply network 5. It is noted that a system on a chip 7 is the most complex architecture for an integrated circuit 1. It can have many different components, under different clock and power domains. If some data or code comes in without being packed into an iContainer component 2A compatible data structure, they will be packed anyway in a created iContainer component. However, data or code in a such a newly created iContainer component 2A will initially be handled much slower in comparison to already used iContainer components 2A due to lack of initial trust. This slow handling will allow sufficient time to execute algorithm to check entanglement of the newly created iContainer component 2A with existing iContainer components 2A in the system. If the negative entanglement is detected then the newly created iContainer will be blocked from execution. Otherwise, if the positive entanglement (without violation of security policies) is detected then newly created iContainer component 2A may proceed with execution. This also applies in analogy to other components 2; 2A-2G which might be added to the integrated circuit 1 (e.g. by adding hardware components, but also possibly dynamically or run-time created components 2; 2A-2G).

The present invention has been described above with reference to a number of exemplary embodiments as shown in the drawings. Modifications and alternative implementations of some parts or elements are possible, and are included in the scope of protection as defined in the appended claims.

## Claims

1. Integrated circuit hardware arrangement comprising one or more components (2; 2A-2G), each of the one or more components (2; 2A-2G) comprising embedded circuitry (21-31) allowing run-time execution of a micro-agent, and an interface to an agent network (4) interconnecting the one or more components (2; 2A-2G), the micro-agent being arranged
- to determine a signature of the associated component (2; 2A-2G),
- to communicate via the agent network (4) with further connected micro-agents being executed in further ones of the one or more components (2; 2A-2G) of the integrated circuit hardware arrangement (1), and
- to detect a possible attack by analysing the determined signature
wherein the one or more components (2; 2A-2G) in combination with the micro-agent being executed, form a basic building block of the integrated circuit hardware arrangement (1).

2. Integrated circuit hardware arrangement according to claim 1, wherein each of the one or more components (2; 2A-2G) comprises a control unit (22) which is arranged to allow the micro-agent to communicate with the further micro-agents.

3. Integrated circuit hardware arrangement according to claim 1 or 2, wherein each of the one or more components (2; 2A-2G) comprises a self-organised cognitive map (23) which is arranged to store data associated with the signature determined by the micro-agent.

4. Integrated circuit hardware arrangement according to claim 1, 2 or 3, wherein each of the one or more components (2; 2A-2G) comprises an interface to a data network (3), the data network (3) providing a control and data interconnection between the one or more components (2; 2A-2G).

5. Integrated circuit hardware arrangement according to claim 1, 2 or 3, wherein specific ones of the one or more components (2; 2A-2G) comprise an interface to a supply network (5), the supply network (5) being arranged to supply power, clock and/or reset signals to the specific ones of the one or more components (2; 2A-2G).

6. Integrated circuit hardware arrangement according to any one of claims 1-5, wherein the micro-agent is further arranged to enter a response on attack state (13) upon detection of a possible attack, the response on attack state (13) comprising active control of the associated component (2; 2A-2G).

7. Integrated circuit hardware arrangement according to any one of claims 1-6, wherein the micro-agent is further arranged:
- to communicate with the further micro-agents via the agent network (4),
- to collect signatures from the further micro-agents,
- to detect a possible attack by analysing the collected signatures, and
- to send control data [Actions and Status] to the further micro-agents via the agent network (4).

8. Integrated circuit hardware arrangement according to claim 7, wherein the micro-agent is further arranged to exchange contracting data with the further micro-agents via the agent network (4).

9. Integrated circuit hardware arrangement according to any one of claims 1-8, wherein the micro-agent is arranged to determine the signature in an asynchronous manner.

10. Integrated circuit hardware arrangement according to any one of claims 1-9, wherein the embedded circuitry comprises a custom logic unit (21) interfacing with logic gates of the component (2; 2A-2G),
wherein the micro-agent is further arranged to determine the signature based on determination of logic gate related parameters.

11. Integrated circuit hardware arrangement according to claim 10, wherein the determination of logic gate related parameters comprises one or more of current behaviour measurement, delay measurement, integrity check, side channel behaviour measurement.

12. Integrated circuit hardware arrangement according to any one of claims 10-11, wherein the micro-agent is further arranged to determine a possible hardware attack by analysing the determined signature.

13. Integrated circuit hardware arrangement according to any one of claims 1-9, wherein the micro-agent is further arranged to execute additional functionality for detecting software attacks.

14. Integrated circuit hardware arrangement according to claim 13, wherein the additional functionality is arranged to collect statistical data associated with the integrated circuit hardware arrangement (1).

15. Integrated circuit hardware arrangement according to any one of claims 1-14, wherein the one or more components (2; 2A-2G) of the integrated circuit hardware arrangement (1) comprises one or more of the following:
an iContainer component (2A) arranged to store data [e.g. using semiconductor memory elements];
an iBrick component (2B) comprising digital logic [e.g. CPU and related elements];
an iConnect component (2C) comprising interface and control circuitry;
an iRouter component (2D) arranged to control data flow between the one or more components;
an iSupply component (2E) arranged to manage clock, power and reset lines;
an iAnalog component (2F) comprising analog circuitry arranged to interface with external analog inputs (e.g. sensor inputs);
an iDebug component (2G) arranged to perform debugging tasks.

16. Integrated circuit hardware arrangement according to claim 15, wherein the integrated circuit hardware arrangement (1) further comprises one or more sensor units (73, 74) connected to an iAnalog component (2F).

17. Integrated circuit hardware arrangement according to any one of claims 1-16, wherein the one or more components (2; 2A-2G) are arranged as a system on a chip (SoC, 7).

## Patentansprüche

1. Hardware-Anordnung für integrierte Schaltkreise, die eine oder mehrere Komponenten (2; 2A-2G) umfasst, wobei jede der einen oder mehreren Komponenten (2; 2A-2G) einen eingebetteten Schaltkreis (21-31), der die Ausführung eines Mikroagenten zur Laufzeit ermöglicht, und eine Schnittstelle zu einem Agentennetzwerk (4) umfasst, das die eine oder mehreren Komponenten (2; 2A-2G) miteinander verbindet, wobei der Mikroagent zu Folgendem angeordnet ist:
- Bestimmen einer Signatur der assoziierten Komponente (2; 2A-2G),
- Kommunizieren mit weiteren verbundenen Mikroagenten, die in weiteren der einen oder mehreren Komponenten (2; 2A-2G) der Hardware-Anordnung für integrierte Schaltkreise (1) ausgeführt werden, über das Agentennetzwerk (4), und
- Erkennen eines möglichen Angriffs durch Analysieren der bestimmten Signatur, wobei die eine oder mehreren Komponenten (2; 2A-2G) in Kombination mit dem ausgeführten Mikroagenten einen Grundbaustein der Hardware-Anordnung für integrierte Schaltkreise (1) bilden.

2. Hardware-Anordnung für integrierte Schaltkreise nach Anspruch 1, wobei jede der einen oder mehreren Komponenten (2; 2A-2G) eine Steuereinheit (22) umfasst, die angeordnet ist, um dem Mikroagenten zu ermöglichen, mit den weiteren Mikroagenten zu kommunizieren.

3. Hardware-Anordnung für integrierte Schaltkreise nach Anspruch 1 oder 2, wobei jede der einen oder mehreren Komponenten (2; 2A-2G) eine selbstorganisierte kognitive Karte (23) umfasst, die angeordnet ist, um Daten zu speichern, die mit der Signatur assoziiert sind, die von dem Mikroagenten bestimmt wird.

4. Hardware-Anordnung für integrierte Schaltkreise nach Anspruch 1, 2 oder 3, wobei jede der einen oder mehreren Komponenten (2; 2A-2G) eine Schnittstelle zu einem Datennetzwerk (3) umfasst, wobei das Datennetzwerk (3) eine Steuer- und Datenverbindung zwischen der einen oder den mehreren Komponenten (2; 2A-2G) bereitstellt.

5. Hardware-Anordnung für integrierte Schaltkreise nach Anspruch 1, 2 oder 3, wobei bestimmte der einen oder mehreren Komponenten (2; 2A-2G) eine Schnittstelle zu einem Versorgungsnetzwerk (5) umfassen, wobei das Versorgungsnetzwerk (5) angeordnet ist, um die bestimmten der einen oder mehreren Komponenten (2; 2A-2G) mit Energie-, Takt- und/oder Rücksetzsignalen zu versorgen.

6. Hardware-Anordnung für integrierte Schaltkreise nach einem der Ansprüche 1-5, wobei der Mikroagent ferner angeordnet ist, um bei Erkennung eines möglichen Angriffs eine Antwort auf den Angriffszustand (13) einzugeben, wobei die Antwort auf den Angriffszustand (13) eine aktive Steuerung der assoziierten Komponente (2; 2A-2G) umfasst.

7. Hardware-Anordnung für integrierte Schaltkreise nach einem der Ansprüche 1-6, wobei der Mikroagent ferner angeordnet ist zum:
- Kommunizieren mit den weiteren Mikroagenten über das Agentennetzwerk (4),
- Sammeln von Signaturen von den weiteren Mikroagenten,
- Erkennen eines möglichen Angriffs durch Analysieren der gesammelten Signaturen, und
- Senden von Steuerdaten [Aktionen und Status] über das Agentennetzwerk (4) an die weiteren Mikroagenten.

8. Hardware-Anordnung für integrierte Schaltkreise nach Anspruch 7, wobei der Mikroagent ferner angeordnet ist, um Vertragsdaten mit den weiteren Mikroagenten über das Agentennetzwerk (4) auszutauschen.

9. Hardware-Anordnung für integrierte Schaltkreise nach einem der Ansprüche 1-8, wobei der Mikroagent angeordnet ist, um die Signatur auf asynchrone Weise zu bestimmen.

10. Hardware-Anordnung für integrierte Schaltkreise nach einem der Ansprüche 1-9, wobei der eingebettete Schaltkreis eine kundenspezifische Logikeinheit (21) umfasst, die mit Logikgattern der Komponente (2; 2A-2G) verbunden ist,
wobei der Mikroagent ferner angeordnet ist, um die Signatur basierend auf der Bestimmung von Logikgatter-bezogenen Parametern zu bestimmen.

11. Hardware-Anordnung für integrierte Schaltkreise nach Anspruch 10, wobei die Bestimmung von Logikgatter-bezogenen Parametern eine oder mehrere der Stromverhaltensmessung, Verzögerungsmessung, Integritätsprüfung und Seitenkanalverhaltensmessung umfasst.

12. Hardware-Anordnung für integrierte Schaltkreise nach einem der Ansprüche 10-11, wobei der Mikroagent ferner angeordnet ist, um einen möglichen Hardware-Angriff durch Analysieren der bestimmten Signatur zu bestimmen.

13. Hardware-Anordnung für integrierte Schaltkreise nach einem der Ansprüche 1-9, wobei der Mikroagent ferner angeordnet ist, um eine zusätzliche Funktionalität zum Erkennen von Software-Angriffen auszuführen.

14. Hardware-Anordnung für integrierte Schaltkreise nach Anspruch 13, wobei die zusätzliche Funktionalität angeordnet ist, um statistische Daten zu sammeln, die mit der Hardware-Anordnung für integrierte Schaltkreise (1) assoziiert sind.

15. Hardware-Anordnung für integrierte Schaltkreise nach einem der Ansprüche 1-14, wobei die eine oder mehreren Komponenten (2; 2A-2G) der Hardware-Anordnung für integrierte Schaltkreise (1) eine oder mehrere der Folgenden umfassen:
eine iContainer-Komponente (2A), die angeordnet ist, um Daten [z.B. unter Verwenden von Halbleiterspeicherelementen] zu speichern;
eine iBrick-Komponente (2B), die digitale Logik [z.B. CPU und zugehörige Elemente] umfasst;
eine iConnect-Komponente (2C), die eine Schnittstelle und einen Steuerschaltkreis umfasst;
eine iRouter-Komponente (2D), die angeordnet ist, um den Datenfluss zwischen der einen oder den mehreren Komponenten zu steuern;
eine iSupply-Komponente (2E), die angeordnet ist, um Takt-, Energie- und Rücksetzleitungen zu verwalten;
eine iAnalog-Komponente (2F), die einen analogen Schaltkreis umfasst, der angeordnet ist, um mit externen analogen Eingaben (z.B. Sensoreingaben) zu verbinden;
eine iDebug-Komponente (2G), die angeordnet ist, um Debugging-Aufgaben auszuführen.

16. Hardware-Anordnung für integrierte Schaltkreise nach Anspruch 15, wobei die Hardware-Anordnung für integrierte Schaltkreise (1) ferner eine oder mehrere Sensoreinheiten (73, 74) umfasst, die mit einer iAnalog-Komponente (2F) verbunden sind.

17. Hardware-Anordnung für integrierte Schaltkreise nach einem der Ansprüche 1-16, wobei die eine oder mehreren Komponenten (2; 2A-2G) als System auf einem Chip (SoC, 7) angeordnet sind.

## Revendications

1. Agencement de matériel de circuit intégré comprenant un ou plusieurs composants (2 ; 2A à 2G), chacun de l'un ou plusieurs composants (2 ; 2A à 2G) comprenant des circuits intégrés (21-31) permettant l'exécution du temps d'exécution d'un micro-agent, et une interface avec un réseau d'agents (4) interconnectant l'un ou plusieurs composants (2 ; 2A à 2G), le micro-agent étant arrangé
- pour déterminer une signature du composant associé (2 ; 2A à 2G),
- pour communiquer via le réseau d'agents (4) avec des micro-agents connectés additionnels étant exécutés dans d'autres de l'un ou plusieurs composants (2 ; 2A à 2G) de l'agencement de matériel de circuit intégré (1), et
- pour détecter une attaque possible en analysant la signature déterminée
où l'un ou plusieurs composants (2 ; 2A à 2G) en combinaison avec le micro-agent étant exécuté, forment un bloc de construction de base de l'agencement de matériel de circuit intégré (1).

2. Agencement de matériel de circuit intégré selon la revendication 1, où chacun de l'un ou plusieurs composants (2 ; 2A à 2G) comprend une unité de contrôle (22) qui est arrangée pour permettre au micro-agent de communiquer avec les micro-agents additionnels.

3. Agencement de matériel de circuit intégré selon la revendication 1 ou 2, où chacun de l'un ou plusieurs composants (2 ; 2A à 2G) comprend une carte cognitive auto-organisée (23) qui est conçue pour stocker des données associées à la signature déterminée par le micro-agent.

4. Agencement de matériel de circuit intégré selon la revendication 1, 2 ou 3, où chacun de l'un ou plusieurs composants (2 ; 2A à 2G) comprend une interface avec un réseau de données (3), le réseau de données (3) fournissant un contrôle et une interconnexion de données entre l'un ou plusieurs composants (2 ; 2A à 2G).

5. Agencement de matériel de circuit intégré selon la revendication 1, 2 ou 3, où certains spécifiques de l'un ou plusieurs composants (2 ; 2A à 2G) comprennent une interface avec un réseau d'alimentation (5), le réseau d'alimentation (5) étant arrangé pour fournir des signaux d'alimentation, d'horloge et/ou de réinitialisation à certains spécifiques de l'un ou plusieurs composants (2 ; 2A à 2G).

6. Agencement de matériel de circuit intégré selon l'une quelconque des revendications 1 à 5, où le micro-agent est en outre arrangé pour entrer une réponse à un état d'attaque (13) lors d'une détection d'une attaque possible, la réponse à un état d'attaque (13) comprenant un contrôle actif du composant associé (2 ; 2A à 2G).

7. Agencement de matériel de circuit intégré selon l'une quelconque des revendications 1 à 6, où le micro-agent est en outre arrangé :
- pour communiquer avec les micro-agents additionnels via le réseau d'agents (4),
- pour collecter des signatures des micro-agents additionnels,
- pour détecter une attaque possible en analysant les signatures collectées, et
- pour envoyer des données de contrôle [Actions et Statut] aux micro-agents additionnels via le réseau d'agents (4).

8. Agencement de matériel de circuit intégré selon la revendication 7, où le micro-agent est en outre arrangé pour échanger des données contractuelles avec les micro-agents additionnels via le réseau d'agents (4).

9. Agencement de matériel de circuit intégré selon l'une quelconque des revendications 1 à 8, où le micro-agent est arrangé pour déterminer la signature de manière asynchrone.

10. Agencement de matériel de circuit intégré selon l'une quelconque des revendications 1 à 9, où les circuits intégrés comprennent une unité logique personnalisée (21) s'interfaçant avec des portes logiques du composant (2 ; 2A-2G),
où le micro-agent est en outre arrangé pour déterminer la signature sur la base d'une détermination de paramètres liés à une porte logique.

11. Agencement de matériel de circuit intégré selon la revendication 10, où la détermination de paramètres liés à une porte logique comprend une ou plusieurs de mesure de comportement actuel, mesure de retard, vérification d'intégrité, mesure de comportement du canal latéral.

12. Agencement de matériel de circuit intégré selon l'une quelconque des revendications 10 à 11, où le micro-agent est en outre arrangé pour déterminer une attaque de matériel possible en analysant la signature déterminée.

13. Agencement de matériel de circuit intégré selon l'une quelconque des revendications 1 à 9, où le micro-agent est en outre arrangé pour exécuter une fonctionnalité supplémentaire pour détecter des attaques de logiciel.

14. Agencement de matériel de circuit intégré selon la revendication 13, où la fonctionnalité supplémentaire est arrangée pour collecter des données statistiques associées à l'agencement de matériel de circuit intégré (1).

15. Agencement de matériel de circuit intégré selon l'une quelconque des revendications 1 à 14, où l'un ou plusieurs composants (2 ; 2A à 2G) de l'agencement de matériel de circuit intégré (1) comprend un ou plusieurs des éléments suivants :
un composant iContainer (2A) conçu pour stocker des données [par ex. utilisant des éléments de mémoire de semi-conducteurs] ;
un composant iBrick (2B) comprenant une logique numérique [par ex. CPU et des éléments liés] ;
un composant iConnect (2C) comprenant des circuits d'interface et de contrôle ;
un composant iRouter (2D) arrangé pour contrôler le flux de données entre l'un ou plusieurs composants ;
un composant iSupply (2E) arrangé pour gérer des lignes d'horloge, d'alimentation et de réinitialisation ;
un composant iAnalog (2F) comprenant des circuits analogiques arrangés pour s'interfacer avec des entrées analogiques externes (par ex. des entrées de capteur) ;
un composant iDebug (2G) arrangé pour effectuer des tâches de débogage.

16. Agencement de matériel de circuit intégré selon la revendication 15, où l'agencement de matériel de circuit intégré (1) comprend en outre une ou plusieurs unités de capteurs (73, 74) connectées à un composant iAnalog (2F).

17. Agencement de matériel de circuit intégré selon l'une quelconque des revendications 1 à 16, où l'un ou plusieurs composants (2 ; 2A à 2G) sont arrangés comme un système sur une puce (SoC, 7).
